# EUROPEAN PATENT SPECIFICATION

(11) **EP 3 093 254 B1**
(45) Date of publication and mention of the grant of the patent: **16.01.2019**
(21) Application number: 14878189.1
(22) Date of filing: 29.09.2014
(51) Int. Cl.: B65D 41/62, B65D 51/20, B65D 17/00

(54) **QUADRUPLE SEALING STRUCTURE OF CAN COVER**
VIERFACHDICHTUNGSSTRUKTUR FÜR DOSENDECKEL
STRUCTURE D'ÉTANCHÉITÉ QUADRUPLE DE COUVERCLE DE CANETTE

(30) Priority: 07.01.2014 KR 20140002071
(43) Date of publication of application: 16.11.2016
(73) Proprietor: Lee, Su-Ho, Gwacheon-si, Gyeonggi-do 427-740 (KR)
(72) Inventor: Lee, Su-Ho, Gwacheon-si, Gyeonggi-do 427-740 (KR)
(74) Representative: Gulde & Partner
(86) International application number: PCT/KR2014/009085
(87) International publication number: WO 2015/105262

(56) References cited:
- EP-A1- 2 269 914
- WO-A1-01/10731
- JP-A- H11 126 649
- JP-B2- 3 161 783
- KR-B1- 101 199 690
- KR-B1- 101 199 690
- US-A- 4 883 192
- US-A- 5 711 447
- US-A1- 2003 222 083
- US-A1- 2003 230 575
- US-B1- 6 575 324
- US-B2- 7 306 111

## Description

### [Technical Field]

The present invention relates to a quadruple sealing structure for a can cover, and more particularly, to a quadruple sealing structure for a can cover, which covers and seals an upper surface of a can to prevent contents stored in the can from leaking to the outside after a closure made along a scored line on the upper surface of the can is opened.

### [Background Art]

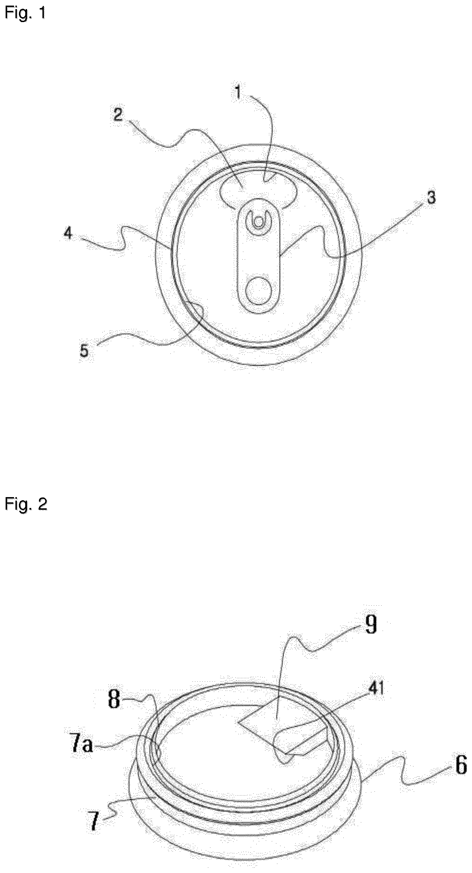

In general, as illustrated in FIG. 1, a closure 2 is formed by a scored line, which has a smaller thickness than an upper surface of a beverage can, at one side of the upper surface of the can, and a lever 3 is fixed to an upper central portion of the can. In this case, the scored line is not formed at a portion where the lever 3 is installed, that is, a portion near the upper central portion of the can at the circumference of the closure 2 so that one side of the closure 2 is coupled to the upper surface of the can. In addition, a tip of the lever 3 is fixed to extend to the upper surface of the closure 2.

Therefore, when a user holds a rear end of the lever 3 and then lifts up the lever 3, the tip of the lever 3 presses an upper surface of the closure 2 downward, and as a result, the circumference of the closure 2 is cut out from the upper surface of the can along the scored line 1 and bent downward to form a discharge port.

According to the typical beverage can having the above structure, the closure 2 is connected to the upper surface of the beverage can and is not separated from the upper surface of the beverage can even though the beverage can is opened, and as a result, this can may be easily recycled and widely used.

Meanwhile, there is a problem in that once the closure 2 of the can is opened, the opening cannot be closed. Therefore, in order to solve the above problem, as illustrated in FIG. 2, an auxiliary closure for a beverage can, which has a quadruple sealing structure, is disclosed in Korean Patent No. 10-1199690.

FIG. 2 illustrates a bottom perspective view illustrating an auxiliary closure for a beverage can according to the related art.

A beverage can, in which the closure 2 is formed by a scored line at one side of an upper surface, the lever 3 is fixed onto the upper central portion, an extending portion 4 having a narrowed diameter portion formed on an outer circumferential surface extends upward from an upper circumferential surface, and a concave groove 5 having a concave ring shape is formed downward so as to be positioned in the extending portion 4, such that when the closure 2 is pushed downward by using the lever 3, the circumferential surface of the closure 2 is cut out from the upper surface of the can to form a discharge port, includes: a support portion 6 having a wide circular plate shape; an outer extending end tube 7 which extends downward from a lower circumferential surface of the support portion 6 and has a catching project 7a, which is caught by the narrowed diameter portion, at an inner circumferential surface thereof; an inner extending end tube 8 which has a smaller diameter than the outer extending end tube 7, extends downward to be concentric with the outer extending end tube 8, and has a lower end inserted into the concave groove 5; and a sealing member 9 which is made of an elastic material, is fixed at a lower side of a support portion 10, and seals the discharge port by being tightly attached to an upper surface around the discharge port.

However, the auxiliary closure in the related art is configured to cover the upper surface of the can so that a sealing member 9 blocks the discharge port, but when the sealing member 9 is inserted between the lever 3 and the upper surface of the can, the discharge port may be securely blocked. In addition, there is an inconvenient problem in that when the upper surface of the can is covered without checking that the sealing member 9 is inserted between the lever 3 and the upper surface of the can, a beverage leaks through the discharge port.

In addition, a spiral groove is formed in an outer surface of the outer extending end tube, and a sealed cover corresponding to the spiral groove of the outer extending end tube, is further formed. However, there is a problem in that significant manual work is required for the spiral groove, and as a result, productivity is decreased.

Therefore, to solve the problems of the auxiliary closure for a beverage can in the related art, there is a need for an auxiliary closure for a beverage can with a new structure.

### [Disclosure]

### [Technical Problem]

The present invention has been made in an effort to solve the above problems, and an object of the present invention is to provide a quadruple sealing structure for a can cover in which the upper surface of the can is sealed without using a sealing member, thereby making it possible to simplify a structure and reduce production costs.

Another object of the present invention is to provide a quadruple sealing structure for a can cover in which the inner O-ring made of a silicone resin is inserted into the circular groove of the inner cover to which the upper sealing portion of the can is coupled, thereby making it possible to improve a tight contact property to prevent contents in the can from leaking.

Yet another object of the present invention is to provide a quadruple sealing structure for a can cover in which the coupling protrusion of the outer coupling ring is inserted into the coupling groove of the inner cover to tighten an outer circumferential protruding portion, thereby making it possible to prevent the upper sealing portion of the can, which is inserted into the circular groove of the inner cover, from being withdrawn from the circular groove, and to increase coupling force.

### [Technical Solution]

According to an exemplary embodiment of the present invention, a can cover comprises: an inner cover comprising a circular groove in which an upper sealing portion of said can is inserted; an inner O-ring tightly attached to said upper sealing portion of said can, wherein said inner O-ring is inserted into said circular groove of said inner cover; and an outer coupling ring comprising a plurality of coupling protrusions inserted into a plurality of coupling grooves formed in an outer circumferential portion of said inner cover; wherein a clearance is formed between said coupling grooves such that when said outer coupling ring is separated from said inner cover, said clearance spreads and separates said inner cover from said upper sealing portion of said can, wherein at least one of said coupling grooves comprises a vertical coupling groove and a horizontal coupling groove, wherein said coupling protrusion of said outer coupling ring is inserted into said vertical coupling groove rotated at a portion where said vertical coupling groove is connected with said horizontal coupling groove and then coupled.

According to an exemplary embodiment of the present invention, the circular groove of the inner cover includes an inner circumferential protruding portion and an outer circumferential protruding portion, and an interval d1 between the inner circumferential protruding portion and the outer circumferential protruding portion is equal to or larger than a thickness d2 of the upper sealing portion, such that an inner circumference and an outer circumference of the upper sealing portion are tightly attached to and sealed by the inner circumferential protruding portion and the outer circumferential protruding portion.

According to an exemplary embodiment, the upper sealing portion of the can may be inserted into the circular groove in a state in which the inner O-ring is assembled by being inserted into the circular groove, and the inner O-ring may be tightly attached onto an upper surface of the upper sealing portion, such that left and right side surfaces and the upper surface of the upper sealing portion of the can are tightly attached and sealed by the inner cover triply at three surfaces.

According to an exemplary embodiment of the present invention, the clearance may be formed between the coupling grooves, such that when the outer coupling ring is separated from the inner cover, the clearances are spread, and as a result, the inner cover is easily separated from the upper sealing portion of the can.

According to the exemplary embodiment of the present invention, a lower projection of the upper sealing portion may be caught by an inner projection of the outer circumferential protruding portion, such that the upper sealing portion is prevented from being withdrawn from the circular groove, and as a result, the upper sealing portion is tightly attached onto the circular groove and maintains a state in which the couple protrusions are inserted into the coupling grooves.

According to the exemplary embodiment of the present invention, the inner cover may have a coupling groove having a " 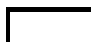 " shape at a circumference thereof, and the coupling groove includes a vertical coupling groove and a horizontal coupling groove, and the coupling protrusion of the outer coupling ring is inserted into the vertical coupling groove, rotated at a portion where the vertical coupling groove is connected with the horizontal coupling groove, and then inserted into and coupled to the horizontal coupling groove while sliding along the horizontal coupling groove.

According to the exemplary embodiment of the present invention, a height h2 of the vertical coupling groove may be shorter than a height h1 of the inner cover, and a length L1 of the horizontal coupling groove may be 1/6 to 1/12 of the outer circumference of the inner cover.

According to the exemplary embodiment of the present invention, the horizontal coupling groove may be formed such that a width thereof is decreased toward the end of the horizontal coupling groove, such that the coupling protrusion is securely tightened by the width of the horizontal coupling groove, and as a result, the horizontal coupling groove is securely coupled to the coupling protrusion.

### [Advantageous Effects]

According to the present invention, the left and right side surfaces and the upper surface of the upper sealing portion of the can are tightly attached to the inner cover triply at three surfaces, thereby sealing the upper surface and maintaining a sealed state of the upper surface of the can. In addition, the upper surface of the can is sealed without using a sealing member that covers a discharge portion of the can, thereby simplifying a structure and reducing production costs. In addition, the outer circumference of the inner cover is tightened by the outer coupling ring, which is coupled by the coupling groove instead of a screw structure, such that the upper sealing portion of the can, which is inserted into the circular groove of the inner cover, is sealed quadruply and is prevented from being withdrawn from the circular groove, thereby increasing coupling force.

### [Description of Drawings]

FIG. 1 is a cross-sectional side view illustrating an auxiliary closure for a beverage can according to the related art.
FIG. 2 is a bottom perspective view illustrating the auxiliary closure for a beverage can according to the related art.
FIG. 3 is an exploded perspective view illustrating a configuration of an exemplary embodiment of a quadruple sealing structure for a can cover according to the present invention.
FIG. 4 is a view illustrating another exemplary embodiment in which a clearance is formed in an inner cover of the quadruple sealing structure for the can cover according to the present invention.
FIG. 5 is a bottom plan view illustrating another exemplary embodiment in which a clearance is formed in the inner cover that constitutes the can cover according to the present invention.
FIG. 6 is a perspective view illustrating a state in which the can cover according to the present invention is assembled.
FIG. 7 is a cross-sectional view taken along line A-A that runs through a center of the can cover according to the present invention.
FIG. 8 is a cross-sectional view taken along line A-A that runs through a center of a can in a state in which the quadruple sealing structure for the can cover according to the present invention covers the can.
FIG. 9 is a perspective view illustrating a state in which the inner cover and an outer coupling ring according to the present invention are separated.
FIG. 10 is a perspective view illustrating a state in which an inner cover, which has a clearance according to another exemplary embodiment of the present invention, is separated from the outer coupling ring.

### [Best Mode]

To achieve the above object, the present invention provides a quadruple sealing structure for a can cover, the quadruple sealing structure including: an inner cover which has a circular groove into which an upper sealing portion of the can is inserted, and covers and seals the upper surface of the can; an inner O-ring which is inserted into the circular groove of the inner cover and tightly attached to the upper sealing portion of the can; and an outer coupling ring which has a plurality of coupling protrusions that is inserted into a plurality of coupling grooves formed in the outer circumferential portion of the inner cover.

### [Mode for Invention]

While the present invention will be described with reference to specific exemplary embodiments, the present invention may be implemented in various different ways, and is not limited to the exemplary embodiments described herein.

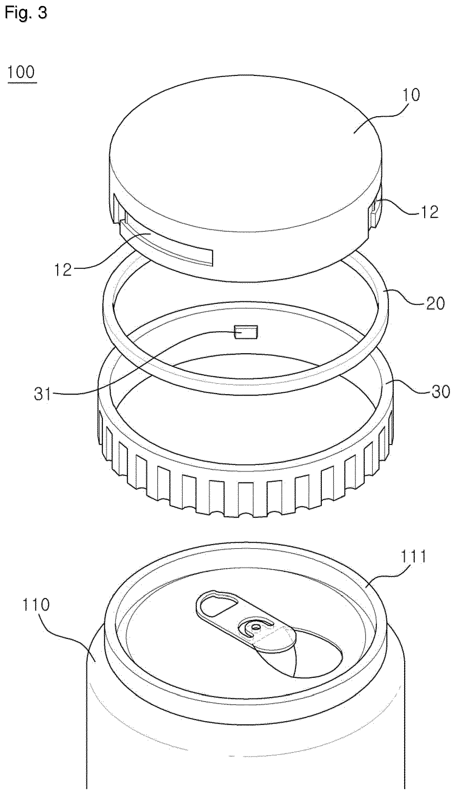

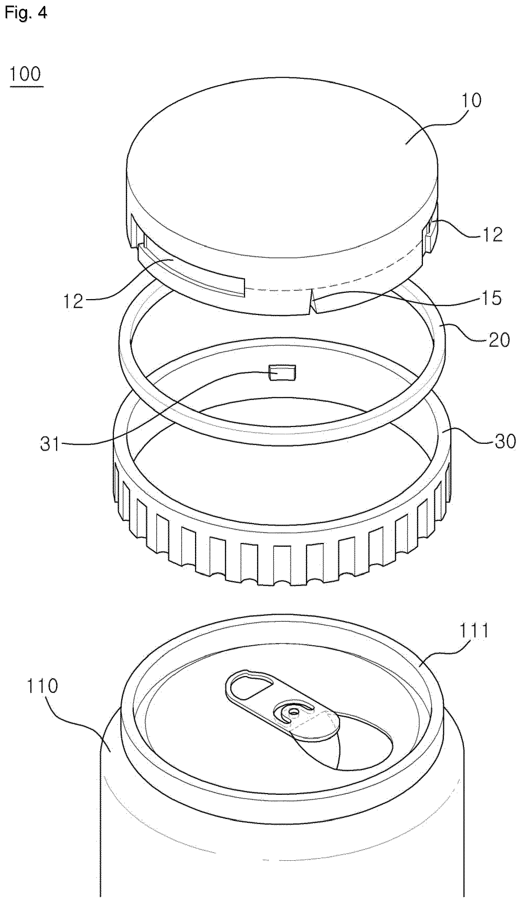

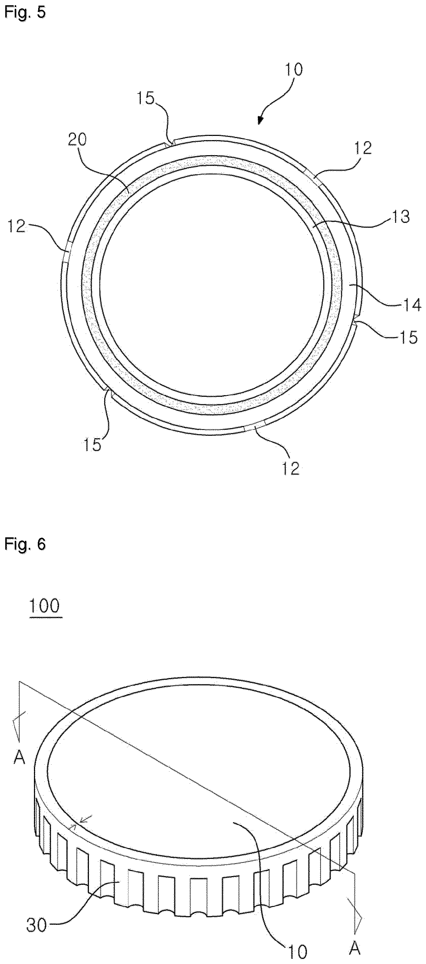

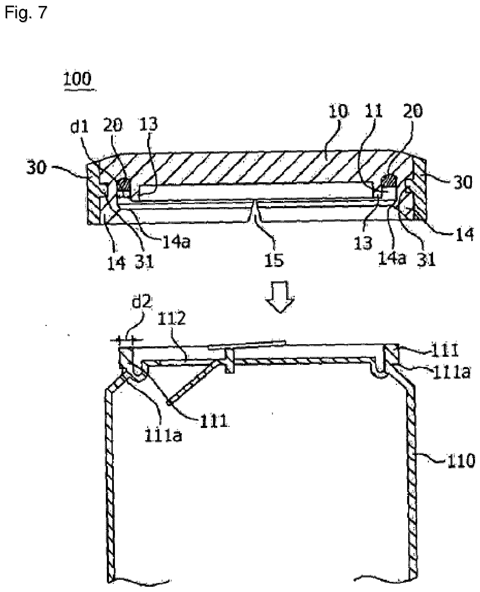

Hereinafter, the present invention will be described with reference to the drawings. FIG. 3 is an exploded perspective view illustrating a configuration of an exemplary embodiment of a quadruple sealing structure for a can cover according to the present invention, FIG. 4 is a view illustrating another exemplary embodiment in which a clearance is formed in an inner cover of the quadruple sealing structure for the can cover according to the present invention, and FIG. 5 is a bottom plan view illustrating another exemplary embodiment of the inner cover that constitutes the can cover according to the present invention. In addition, FIG. 6 is a perspective view illustrating a state in which the quadruple sealing structure for the can cover according to the present invention is assembled, and FIG. 7 is a cross-sectional view taken along line A-A that runs through a center of the quadruple sealing structure for the can cover according to the present invention.

A quadruple sealing structure 100 for a can cover according to the present invention includes: an inner cover 10 which has a circular groove 11 into which an upper sealing portion 111 formed at an upper end portion of a can 110 is inserted, and covers and seals an upper surface of the can 110; an inner O-ring 20 which is inserted into the circular groove 11 of the inner cover 10 and tightly attached to the upper sealing portion 111 of the can 110; and an outer coupling ring 30 which has a plurality of coupling protrusions 31 that is inserted into a plurality of coupling grooves 12 formed in an outer circumferential portion of the inner cover 10.

The inner cover 10 according to the present invention has the circular groove 11, which is opened at a lower side thereof, so that the upper sealing portion 111 formed at the upper end portion of the can 110 is inserted into the circular groove 11. The inner cover 10 may be made of a synthetic resin such as polypropylene.

The circular groove 11 is formed concentrically with the upper sealing portion 111 of the can 110, such that when the upper surface of the can 110 is covered by the inner cover 10, the upper sealing portion 111 is inserted into and tightly attached to the circular groove 11.

According to another exemplary embodiment of the inner cover, as illustrated in FIGS. 5 and 6, clearances 15 may be formed between the plurality of coupling grooves 12, respectively. Therefore, when the outer coupling ring 30 is separated from the inner cover 10, for example, three clearances 15 are spread, and as a result, the inner cover 10 may be easily separated from the upper sealing portion 111 of the can 110. In addition, in a case in which gas is produced from contents in the can 10 and gas pressure is applied inside the inner cover 10, the clearances 15 are spread, and gas leaks, thereby eliminating pressure. In this case, it is possible to prevent the contents from spurting due to gas when the inner cover 10 is separated from the can 110.

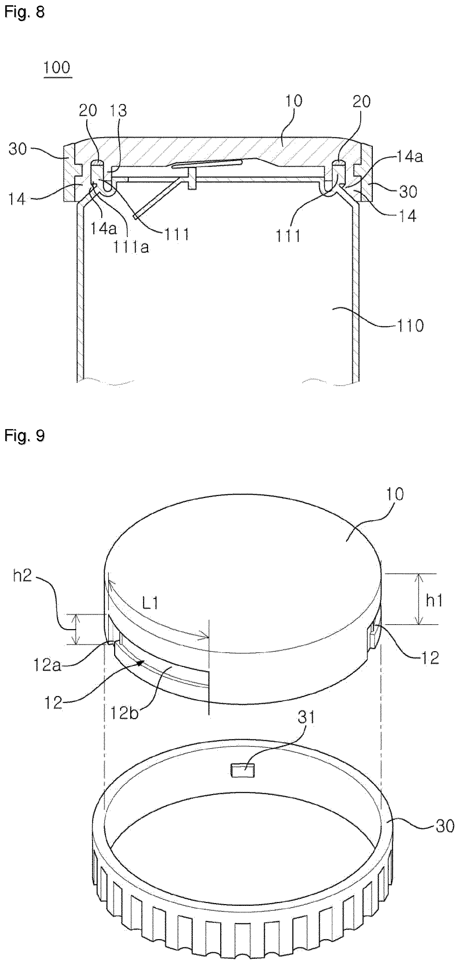

FIG. 8 is a cross-sectional view taken along line A-A that runs through a center of a can in a state in which the quadruple sealing structure for the can cover according to the present invention covers the can.

The inner O-ring 20 is inserted into the circular groove 11 before the upper sealing portion 111 of the can 110 is inserted into the circular groove 11. Thereafter, an upper surface of the upper sealing portion 111 is tightly attached to the inner O-ring 20, and left and right side surfaces and the upper surface of the upper sealing portion 111 of the can 110 are tightly attached to the inner cover 10 triply at three surfaces, thereby sealing the upper surface of the can 110.

The inner O-ring 20 may be made of a silicone resin or the like, at least has a cross section having a quadrangular shape having a rounded upper surface, and may be assembled by being inserted into the circular groove 11. Therefore, when the upper sealing portion 111 of the can 110 is inserted into the circular groove 11, the inner O-ring 20 is tightly attached to the upper surface of the upper sealing portion 111, thereby sealing the upper surface of the can 110.

In addition, the circular groove 11 of the inner cover 10 includes an inner circumferential protruding portion 13 and an outer circumferential protruding portion 14. In this case, an interval d1 between the inner circumferential protruding portion 13 and the outer circumferential protruding portion 14 is equal to or slightly larger than a thickness d2 of the upper sealing portion 111, such that when the upper sealing portion 111 of the can 110 is inserted into the circular groove 11, an inner circumference and an outer circumference of the upper sealing portion 111 may be tightly attached to and sealed by the inner circumferential protruding portion 13 and the outer circumferential protruding portion 14.

In this case, a lower projection 111a of the upper sealing portion 111 is caught by an inner projection 14a of the outer circumferential protruding portion 14, thereby preventing the upper sealing portion 111 from being withdrawn from the circular groove 11. In addition, it is possible to maintain a state in which the upper sealing portion 111 is tightly attached to and inserted into the circular groove 11.

In addition, the state in which the upper sealing portion 111 is inserted into the circular groove 11 is maintained as the lower projection 111a of the upper sealing portion 111 is caught by the inner projection 14a, such that the inner O-ring 20 is tightly attached to the upper sealing portion 111 by being pressed by the upper sealing portion 111. Therefore, a stored liquid stored in the can 110 does not leak to the outside even though the liquid flows out of an outlet 112.

Therefore, the left and right side surfaces and the upper surface of the upper sealing portion 111 of the can 110 are tightly attached to the inner cover 10 triply at three surfaces, and as a result, the upper surface of the can 110 is sealed and is blocked from being communication with the outside, thereby maintaining a sealed state.

However, the quadruple sealing structure 100 for the can cover according to the present invention is not limited to the triple sealing, and provides quadruple sealing that tightens an outer circumference of the inner cover 10 with the outer coupling ring 30.

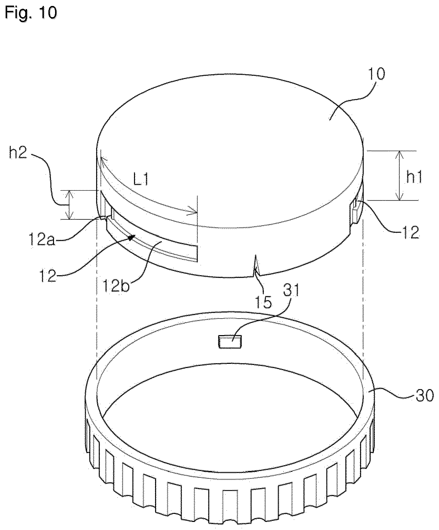

FIG. 9 is a perspective view illustrating a state in which the inner cover and the outer coupling ring according to the present invention are separated, and FIG. 10 is a perspective view illustrating a state in which an inner cover, which has a clearance according to yet another exemplary embodiment of the present invention, is separated from the outer coupling ring.

The inner cover 10 according to the present invention has the coupling groove 12 that is formed in the outer circumference of the inner cover 10 and has a " 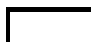 " shape, and the coupling groove 12 may include a vertical coupling groove 12a and a horizontal coupling groove 12b. In addition, a height h2 of the vertical coupling groove 12a may be, for example, about 2/3 of a height h1 of the inner cover 10, and a length L1 of the horizontal coupling groove 12b may be, for example, about 1/6 of the outer circumference of the inner cover 10.

The length L1 of the horizontal coupling groove 12b is determined depending on the number of coupling grooves 12, and in the present exemplary embodiment, three coupling grooves 12 are formed to form an angle of 120° therebetween, such that the three coupling grooves 12 are formed at points defined by dividing the outer circumference of the inner cover 10 into three equal parts, and the length L1 of the horizontal coupling groove 12b may be set to a length corresponding to 1/6 of the outer circumference of the inner cover 10 which is made by dividing 1/3 of the outer circumference of the inner cover 10 into two equal parts.

The more the number of coupling grooves 12, the higher the coupling force between the inner cover 10 and the outer coupling ring 30. However, because the length L1 of the horizontal coupling groove 12b is shortened, it may be difficult to simultaneously couple the plurality of coupling protrusions 31 to the plurality of coupling grooves 12. Therefore, for example, the number of coupling grooves 12 is determined in a range in which the length L1 of the horizontal coupling groove 12b is not too short, and the coupling force between the inner cover 10 and the outer coupling ring 30 is strong, for example, in a range from three to six.

The outer coupling ring 30 is made of an ABS resin or the like. The coupling protrusion 31 of the outer coupling ring 30 is inserted into the vertical coupling groove 12a, rotated counterclockwise at a portion where the vertical coupling groove 12a is connected with the horizontal coupling groove 12b, and then inserted into the horizontal coupling groove 12b while sliding along the horizontal coupling groove 12b. In this case, when the coupling protrusion 31 is rotated by the length L1 of the horizontal coupling groove 12b and then reaches the other end of the horizontal coupling groove 12b, the outer coupling ring 30 is completely coupled.

With the outer coupling ring 30, the outer circumferential protruding portion 14 of the inner cover 10 is tightened, and as a result, it is possible to prevent the upper sealing portion 111 of the can 110, which is inserted into the circular groove 11 of the inner cover 10, from being withdrawn from the circular groove 11, thereby increasing coupling force.

The number of coupling protrusions 31 of the outer coupling ring 30 may be equal to the number of coupling grooves 12 of the inner cover 10. However, the number of coupling protrusions 31 may be smaller than the number of coupling grooves 12, but the number of coupling protrusions 31 may be at least two so that the inner cover 10 and the outer coupling ring 30 are coupled to each other at two or more points.

In addition, the horizontal coupling groove 12b is formed such that a width thereof is decreased toward the end of the horizontal coupling groove 12b, such that the coupling protrusion 31 is securely tightened by the width of the horizontal coupling groove 12b, and as a result, the horizontal coupling groove 12b is securely coupled to the coupling protrusion 31.

In addition, as illustrated in FIG. 10 as yet another exemplary embodiment, one or more clearances 15 may be formed between the coupling grooves 12 to the middle of the horizontal coupling groove 12b. In this case, when the inner cover 10 is tightened by the outer coupling ring 30, the clearance 15 becomes narrow. Therefore, it is possible to prevent the upper sealing portion 111 of the can 110, which is inserted into the circular groove 11 of the inner cover 10, from being withdrawn from the circular groove 11, thereby further increasing coupling force. When the outer coupling ring 30 is separated from the inner cover 10, the clearance 15 is spread again. In this case, even though the inside of the inner cover 10 is filled with gas, it is possible to prevent the contents from explosively spurting due to a gas leak.

The present invention is not limited to the above specific preferred exemplary embodiments, the exemplary embodiments may be variously modified by those skilled in the art to which the present invention pertains without departing from the subject matters of the present invention claimed in the claims, and the modifications belong to the scope disclosed in the claims.

## Claims

1. A can cover comprising:
an inner cover (10) comprising a circular groove (11) in which an upper sealing portion (111) of said can is inserted;
an inner O-ring (20) tightly attached to said upper sealing portion (111) of said can, wherein said inner O-ring (20) is inserted into said circular groove (11) of said inner cover (10); and
an outer coupling ring (30) comprising a plurality of coupling protrusions (31) inserted into a plurality of coupling grooves (12) formed in an outer circumferential portion of said inner cover (10);
wherein a clearance (15) is formed between said coupling grooves (12) such that when said outer coupling ring (30) is separated from said inner cover (10), said clearance (15) spreads and separates said inner cover (10) from said upper sealing portion (111) of said can, wherein at least one of said coupling grooves (12) comprises a vertical coupling groove (12a) and a horizontal coupling groove (12b), wherein said coupling protrusion (31) of said outer coupling ring (30) is inserted into said vertical coupling groove (12a), rotated at a portion where said vertical coupling groove (12a) is connected with said horizontal coupling groove (12b) and then coupled.

2. The can cover of claim 1, wherein said circular groove (11) of said inner cover (10) includes an inner circumferential protruding portion (13) and an outer circumferential protruding portion (14) spaced apart with a distance d1.

3. The can cover of claim 2, wherein said distance d1 between said inner circumferential protruding portion (13) and said outer circumferential protruding portion (14) is greater than or equal to a thickness d2 of said upper sealing portion (111).

4. The can cover of claim 2, wherein said inner circumferential protruding portion (13) and said outer circumferential protruding portion (14) are tightly attached to an inner circumference and an outer circumference of said upper sealing portion (111).

5. The can cover of claim 1, wherein said upper sealing portion (111) of said can is inserted into said circular groove (11) in a state to assemble said inner O-ring (20) by inserting into said circular groove (11).

6. The can cover of claim 5, wherein said inner O-ring (20) is tightly attached to an upper surface of said upper sealing portion (111).

7. The can cover of claim 2, wherein a lower projection (111a) of said upper sealing portion (111) is caught by an inner projection (14a) of said outer circumferential protruding portion (14) to prevent said upper sealing portion (111) from being withdrawn from said circular groove (11), such that the upper sealing portion (111) is tightly attached to said circular groove (11), and a state in which said upper sealing portion (111) of said can is inserted into said circular groove (11) is maintained.

8. The can cover of claim 1, wherein a length L1 of said horizontal coupling groove (12b) is approximately 1/6 to 1/12 of said outer circumference of said inner cover (10).

9. The can cover of claim 1, wherein said horizontal coupling groove (12b) is formed such that a width thereof is decreased toward an end of said horizontal coupling groove (12b).

## Patentansprüche

1. Dosendeckel, umfassend:
einen inneren Deckel (10), der eine Ringnut (11) umfasst, in der ein oberer Dichtungsabschnitt (111) der Dose eingesetzt ist;
einen inneren O-Ring (20), der eng an dem oberen Dichtungsabschnitt (111) der Dose befestigt ist, wobei der innere O-Ring (20) in die Ringnut (11) des inneren Deckels (10) eingesetzt ist; und
einen äußeren Kupplungsring (30), der eine Mehrzahl von Kupplungsvorsprüngen (31) umfasst, die in eine Mehrzahl von in einem äußeren Umfangsabschnitt des inneren Deckels (10) ausgebildeten Kupplungsnuten (12) eingesetzt sind;
wobei ein Zwischenraum (15) zwischen den Kupplungsnuten (12) ausgebildet ist, sodass wenn der äußere Kupplungsring (30) von dem inneren Deckel (10) getrennt wird, der Zwischenraum (15) breiter wird und den inneren Deckel (10) von dem oberen Dichtungsabschnitt (111) der Dose trennt, wobei mindestens eine der Kupplungsnuten (12) eine vertikale Kupplungsnut (12a) und eine horizontale Kupplungsnut (12b) umfasst, wobei der Kupplungsvorsprung (31) des äußeren Kupplungsrings (30) in die vertikale Kupplungsnut (12a) eingesetzt wird, an einem Abschnitt, wo die vertikale Kupplungsnut (12a) mit der horizontalen Kupplungsnut (12b) verbunden ist, gedreht wird und dann gekuppelt wird.

2. Dosendeckel nach Anspruch 1, wobei die Ringnut (11) des inneren Deckels (10) einen inneren vorstehenden Umfangsabschnitt (13) und einen äußeren vorstehenden Umfangsabschnitt (14) umfasst, die mit einem Abstand d1 voneinander beabstandet sind.

3. Dosendeckel nach Anspruch 2, wobei der Abstand d1 zwischen dem inneren vorstehenden Umfangsabschnitt (13) und dem äußeren vorstehenden Umfangsabschnitt (14) größer als oder gleich eine(r) Dicke d2 des oberen Dichtungsabschnittes (111) ist.

4. Dosendeckel nach Anspruch 2, wobei der innere vorstehende Umfangsabschnitt (13) und der äußere vorstehende Umfangsabschnitt (14) eng an einem Innenumfang und einem Außenumfang des oberen Dichtungsabschnittes (111) befestigt sind.

5. Dosendeckel nach Anspruch 1, wobei der obere Dichtungsabschnitt (111) der Dose in einem Zustand, um den inneren O-Ring (20) durch Einsetzen in die Ringnut (11) zu montieren, in die Ringnut (11) eingesetzt wird.

6. Dosendeckel nach Anspruch 5, wobei der innere O-Ring (20) eng an einer oberen Oberfläche des oberen Dichtungsabschnittes (111) befestigt ist.

7. Dosendeckel nach Anspruch 2, wobei ein unterer Vorsprung (lila) des oberen Dichtungsabschnittes (111) von einem inneren Vorsprung (14a) des äußeren vorstehenden Umfangsabschnittes (14) aufgefangen wird, um zu verhindern, dass der obere Dichtungsabschnitt (111) aus der Ringnut (11) herausgezogen wird, sodass der obere Dichtungsabschnitt (111) eng an der Ringnut (11) befestigt ist, und ein Zustand, in dem der obere Dichtungsabschnitt (111) der Dose in die Ringnut (11) eingesetzt ist, beibehalten wird.

8. Dosendeckel nach Anspruch 1, wobei eine Länge L1 der horizontalen Kupplungsnut (12b) etwa 1/6 bis 1/12 des Außenumfangs des inneren Deckels (10) beträgt.

9. Dosendeckel nach Anspruch 1, wobei die horizontale Kupplungsnut (12b) so ausgebildet ist, dass sich ihre Breite in Richtung eines Endes der horizontalen Kupplungsnut (12b) verringert.

## Revendications

1. Couvercle de cannette, comprenant :
un couvercle intérieur (10) comprenant une rainure circulaire (11) dans laquelle une partie d'étanchéité supérieure (111) de ladite cannette est insérée ;
un joint torique intérieur (20) hermétiquement attaché à ladite partie d'étanchéité supérieure (111) de ladite cannette, ledit joint torique (20) étant inséré dans ladite rainure circulaire (11) dudit couvercle intérieur (10) ; et
une virole de raccordement extérieure (30) comprenant une pluralité de saillies de raccordement (31) insérées dans une pluralité de rainures de raccordement (12) formées dans une partie périphérique extérieure dudit couvercle intérieur (10) ;
un écartement (15) étant formé entre lesdites rainures de raccordement (12) de telle sorte que, lorsque ladite virole de raccordement extérieure (30) est séparée dudit couvercle intérieur (10), ledit écartement (15) s'étend et sépare ledit couvercle intérieur (10) de ladite partie d'étanchéité supérieure (111) de ladite cannette, au moins une des susdites rainures de raccordement (12) comprenant une rainure de raccordement verticale (12a) et une rainure de raccordement horizontale (12b), ladite saillie de raccordement (31) de ladite virole de raccordement extérieure (30) étant insérée dans ladite rainure de raccordement verticale (12a), pivotée au niveau d'une partie où ladite rainure de raccordement verticale (12a) est connectée à ladite rainure de raccordement horizontale (12b), puis raccordée.

2. Couvercle de cannette selon la revendication 1, ladite rainure circulaire (11) dudit couvercle intérieur (10) incluant une partie saillante périphérique intérieure (13) et une partie saillante périphérique extérieure (14) espacées l'une de l'autre par une distance d1.

3. Couvercle de cannette selon la revendication 2, ladite distance d1 entre ladite partie saillante périphérique intérieure (13) et ladite partie saillante périphérique extérieure (14) étant supérieure ou égale à une épaisseur d2 de ladite partie saillante supérieure (111).

4. Couvercle de cannette selon la revendication 2, ladite partie saillante périphérique intérieure (13) et ladite partie saillante périphérique extérieure (14) étant hermétiquement attachées à une circonférence intérieure et à une circonférence extérieure de ladite partie d'étanchéité supérieure (111).

5. Couvercle de cannette selon la revendication 1, ladite partie d'étanchéité supérieure (111) de ladite cannette étant insérée dans ladite rainure circulaire (11) de manière à assembler ledit joint torique intérieur (20) en l'insérant dans ladite rainure circulaire (11).

6. Couvercle de cannette selon la revendication 5, ledit joint torique intérieur (20) étant hermétiquement attaché à une surface supérieure de ladite partie d'étanchéité supérieure (111).

7. Couvercle de cannette selon la revendication 2, une projection inférieure (111a) de ladite partie d'étanchéité supérieure (111) étant prise dans une projection intérieure (14a) de ladite partie saillante périphérique extérieure (14) pour empêcher ladite partie d'étanchéité supérieure (111) d'être retirée de ladite rainure circulaire (11), de telle sorte que la partie d'étanchéité supérieure (111) est hermétiquement attachée à ladite rainure circulaire (11) et qu'un état dans lequel la partie d'étanchéité supérieure (111) de ladite cannette est insérée dans ladite rainure circulaire (11) est maintenu.

8. Couvercle de cannette selon la revendication 1, une longueur L1 de ladite rainure de raccordement horizontale (12b) étant approximativement de 1/6 à 1/12 de ladite circonférence extérieure dudit couvercle intérieur (10).

9. Couvercle de cannette selon la revendication 1, ladite rainure de raccordement horizontale (12b) étant formée de telle sorte qu'une largeur de celle-ci diminue vers une extrémité de ladite rainure de raccordement horizontale (12b).
